(19) Europäisches Patentamt

European Patent Office

Office européen des brevets

(11) **EP 3 886 073 A1**

(12) **EUROPEAN PATENT APPLICATION**

(43) Date of publication:
**29.09.2021  Bulletin 2021/39**

(51) Int Cl.:
***G08G 1/0967*** (2006.01)

(21) Application number: **21159667.1**

(22) Date of filing: **26.02.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.03.2020  US 202063000571 P
23.12.2020  US 202017132578**

(71) Applicant: **INTEL Corporation
Santa Clara, CA 95054 (US)**

(72) Inventors:
 • **SIVANESAN, Kathiravetpillai
  Portland, OR 97229 (US)**
 • **BUERKLE, Cornelius
  76137 Karlsruhe (DE)**
 • **JAH, Satish Chandra
  Portland, OR 97229 (US)**

 • **SHARMA BANJADE, Vesh Raj
  Portland, OR 97229 (US)**
 • **GASSMANN, Bernd
  75334 Straubenhardt (DE)**
 • **ALVAREZ, Ignacio
  Portland, OR 97229 (US)**
 • **GONZALEZ AGUIRRE, David
  Hillsboro, OR 97124 (US)**
 • **MERWADAY, Arvind
  Hillsboro, OR 97124 (US)**
 • **GOMES BALTAR, Leonardo
  80804 München (DE)**
 • **OBORIL, Fabian
  75139 Karlsruhe (DE)**
 • **ELLI, Maria
  Hillsboro, OR 97124 (US)**

(74) Representative: **2SPL Patentanwälte PartG mbB
Postfach 15 17 23
80050 München (DE)**

(54) **COLLABORATIVE SAFETY DRIVING MODEL (SDM) FOR AUTONOMOUS VEHICLES**

(57)    A system of a collaborative Autonomous Vehicle (AV) Safety Driving Model (SDM) system, including at least one processor; and a non-transitory computer-readable storage medium including instructions that, when executed by the at least one processor, cause the at least one processor to: generate, in response to a condition being satisfied, an SDM message including encoded data representing a warning or a safety parameter; and cause a transceiver to transmit the generated SDM message.

FIG. 1

100
Autonomous Vehicle (AV)

## Description

## Technical Field

Aspects described herein generally relate to autonomous vehicles (AV) and, more particularly, to techniques implementing the transmission and sharing of safety parameters among autonomous vehicles.

## Background

In Autonomous Vehicles (AVs), safety driving models provide a mathematical (parametric) framework for safety assurance with common sense rules. These rules comply with how humans interpret the law, and formalize a safety check around a driving policy of an AV with several parametric definitions for safe longitudinal (same and opposite directions), and lateral minimum distances, response times/thresholds, evasive maneuver, etc. The safety parameters that are defined by safety driving models typically depend on the speeds, reasonable maximum accelerations, reasonable maximum decelerations, and response times of the vehicles. These safety parameters also depend on the type of the vehicle, vehicle loading, age or mechanical conditions of the vehicle, environmental conditions, and choice of driving style. This parametric safety checker can be executed within the AV's driving policy to abide by the law and guarantee safety during dangerous or near dangerous situations to achieve what is known as "Vision Zero," or a strategy to eliminate all traffic fatalities and severe injuries while increasing safe, healthy, and equitable mobility for all.

However, conventional AV systems typically use their own sets of safety parameters, which may change based upon changes in the environment or other factors upon which the safety parameters are based. Thus, the safety parameters are useful for each AV to implement, but currently are not shared among other vehicles. As a result, the use of traditional safety driving models present drawbacks, as AVs may remain unaware of the actions of other AVs in accordance with other AVs respective safety driving models.

## Brief Description of the Drawings

FIG. 1 illustrates an exemplary autonomous vehicle in accordance with various aspects of the present disclosure;

FIG. 2 illustrates various exemplary electronic components of a safety system of the exemplary autonomous vehicle of FIG. 1 in accordance with various aspects of the present disclosure;

FIG. 3 illustrates an exemplary autonomous driving environment; and

FIG. 4 illustrates an exemplary block flow diagram in accordance with various aspects of the present disclosure.

## Description of the Aspects

Human error, faulty equipment, and unpropitious environmental conditions are associated as the primary cause for accidents, with human error being the largest contributor. When facing dangerous or near-dangerous situations while driving, drivers ordinarily take some actions to prevent accidents and show some gestures and cues (e.g., facial or hand gestures, flashing lights, honking, etc.) to warn other drivers and road users of any danger or complement them for their actions.

AVs have been designed to minimize human error by implementing autonomous systems that use Safety Driving Models (SDMs) and accompanying safety parameters, as noted above. However, even if every AV follows its own safety driving model rules and driving policies, dangerous situations may still arise due to changes in environmental (road) conditions, malfunctioning equipment, anomalies, etc. AVs generally operate by adapting their safety driving model in accordance with these updated safety parameters. Thus, in such situations, safety would be further improved by adopting a strategy that is analogous to that used by human drivers, that is, by showing gestures and cues by sharing safety parameters, actions, and/or intentions with neighboring vehicles.

Along this vein of reasoning, the aspects as described herein aim to mirror such human activities in AV systems by providing a set of safety parameters that may be transmitted and thus shared with other AVs. This is particularly useful because, as noted above, the safety parameters often change dynamically based upon changes in vehicle speed, the movement and position of other vehicles, environmental changes, etc. To do so, the aspects described herein are directed to a Safety Driving Model (SDM) message transmission protocol and triggering mechanism for sharing safety-relevant data using messaging with neighboring vehicles. As further discussed herein, the aspects include the content of SDM messages, the safety parameters to be transmitted as part of such SDM messages, triggering conditions to transmit SDM messages, as well as the format or protocol of such transmissions.

In other words, sharing the safety parameters with other vehicles in the vicinity helps those vehicles to accurately estimate their own safety parametric definitions. The set of rules implemented in accordance with a particular safety driving model as discussed in accordance with the aspects described herein may be enforced whenever an AV is in a dangerous or near-dangerous situation. For example, a safety driving model may define rules such as longitudinal minimum distance, a lateral minimum distance, etc. that, when enforced, cause the AV to broadcast a SDM message using a suitable communication channel (e.g., V2V/V2X channels). Doing so provides the vehicle that is causing the dangerous situation (i.e., the enforcement of the sending AV's safety parameters) an SDM message from the other vehicle that was responsible for the safety parameter enforcement. Other surrounding vehicles may also receive or "overhear" the message, and thus become aware of a dangerous situation in their vicinity. Sharing the enforcement of SDM defined rules with surrounding vehicles in this manner will advantageously reduce the number of dangerous situations and help to achieve the aforementioned Vision Zero.

Various aspects are described throughout the disclosure with reference to autonomous vehicles by way of example and not limitation. For instance, although the aspects described herein may advantageously be used as part of an AV architecture, the aspects may be implemented as part of any suitable type of fully autonomous vehicle, semi-autonomous vehicle, or non-autonomous vehicle. Thus, the aspects as described herein may interchange terms such as "autonomous vehicle" and "vehicle," which is done with the understanding that the aspects described herein may be implemented by any suitable type of vehicle that is configured to transmit, process, and/or receive SDM messages, and use the data encoded therein.

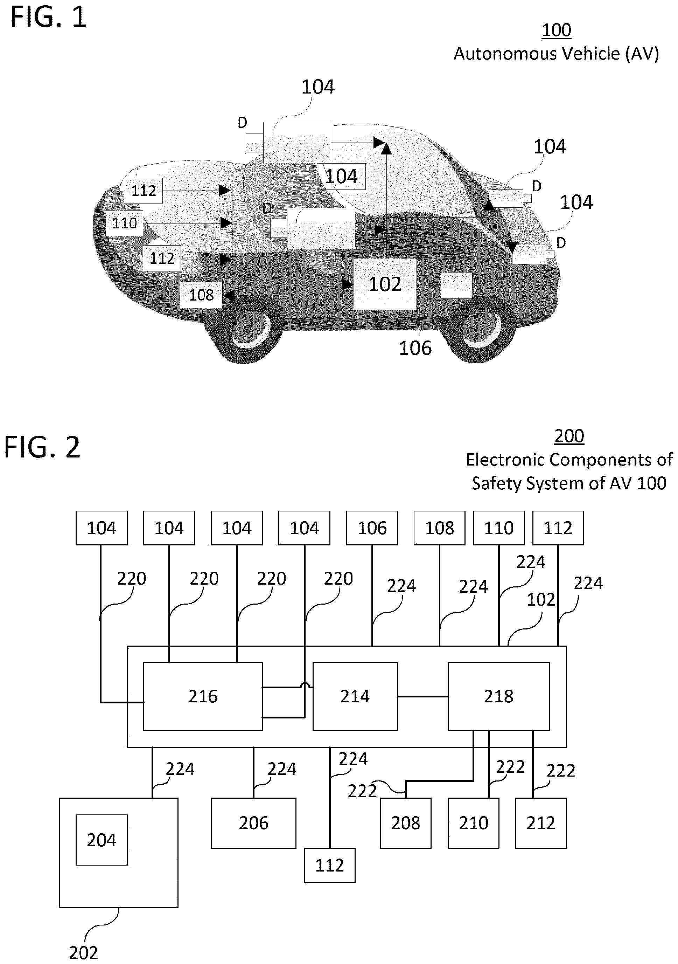

FIG. 1 shows a vehicle 100 including a safety system 200 (see also FIG. 2) in accordance with various aspects of the present disclosure. The vehicle 100 and the safety system 200 are exemplary in nature, and may thus be simplified for explanatory purposes. Locations of elements and relational distances (as discussed above, the Figures are not to scale) and are provided by way of example and not limitation. The safety system 200 may include various components depending on the requirements of a particular implementation.

As shown in FIG. 1 and FIG. 2, the safety system 200 may include one or more processors 102, one or more image acquisition devices 104 such as, e.g., one or more cameras, one or more position sensors 106 such as a Global Navigation Satellite System (GNSS), e.g., a Global Positioning System (GPS), one or more memories 202, one or more map databases 204, one or more user interfaces 206 (such as, e.g., a display, a touch screen, a microphone, a loudspeaker, one or more buttons and/or switches, and the like), and one or more wireless transceivers 208, 210, 212.

The wireless transceivers 208, 210, 212 may be implemented as any suitable combination of transmitters and receivers, which may be separate or integrated components, and may be configured according to different desired radio communication protocols or standards. By way of example, a wireless transceiver (e.g., a first wireless transceiver 208) may be configured in accordance with a Short Range mobile radio communication standard such as e.g., Bluetooth, Zigbee, and the like. As another example, a wireless transceiver (e.g., a second wireless transceiver 210) may be configured in accordance with a Medium or Wide Range mobile radio communication standard such as, for example, a 3G (e.g., Universal Mobile Telecommunications System - UMTS), a 4G (e.g., Long Term Evolution - LTE), or a 5G mobile radio communication standard in accordance with corresponding 3GPP (3rd Generation Partnership Project) standards. As a further example, a wireless transceiver (e.g., a third wireless transceiver 212) may be configured in accordance with a Wireless Local Area Network communication protocol or standard such as, for example, in accordance with IEEE 802.11 (e.g., 802.11, 802.11a, 802.11b, 802.11g, 802.11n, 802.11p, 802.11-12, 802.11ac, 802.11ad, 802.11ah, and the like). The one or more wireless transceivers 208, 210, 212 may be configured to transmit signals via an antenna system (not shown) via an air interface.

The one or more processors 102 may include an application processor 214, an image processor 216, a communication processor 218, or any other suitable processing device. Similarly, image acquisition devices 104 may include any number of image acquisition devices and components depending on the requirements of a particular application. Image acquisition devices 104 may include one or more image capture devices (e.g., cameras, charge coupling devices (CCDs), or any other type of image sensor). The safety system 200 may also include a data interface communicatively connecting the one or more processors 102 to the one or more image acquisition devices 104. For example, a first data interface may include any wired and/or wireless first link 220, or first links 220 for transmitting image data acquired by the one or more image acquisition devices 104 to the one or more processors 102, e.g., to the image processor 216.

The wireless transceivers 208, 210, 212 may be coupled to the one or more processors 102, e.g., to the communication processor 218, e.g., via a second data interface. The second data interface may include any wired and/or wireless second link 222 or second links 222 for transmitting radio transmitted data acquired by wireless transceivers 208, 210, 212 to the one or more processors 102, e.g., to the communication processor 218.

The memories 202 as well as the one or more user interfaces 206 may be coupled to each of the one or more processors 102, e.g., via a third data interface. The third data interface may include any wired and/or wireless third link 224 or third links 224. Furthermore, the position sensor 106 may be coupled to each of the one or more processors 102, e.g., via the third data interface.

Such transmissions may also include communications (one-way or two-way) between the vehicle 100 and one or more other (target) vehicles in an environment of the vehicle 100 (e.g., to facilitate coordination of navigation of the vehicle 100 in view of or together with other (target) vehicles in the environment of the vehicle 100), or even a broadcast transmission to unspecified recipients in a vicinity of the transmitting vehicle 100.

One or more of the transceivers 208, 210, 212 may be configured to implement one or more vehicle to everything (V2X) communication protocols, which may include vehicle to vehicle (V2V), vehicle to infrastructure (V2I), vehicle to network (V2N), vehicle to pedestrian (V2P), vehicle to device (V2D), vehicle to grid (V2G), and any other suitable protocols.

Each processor 214, 216, 218 of the one or more processors 102 may include various types of hardware-based processing devices. By way of example, each processor 214, 216, 218 may include a microprocessor, pre-processors (such as an image pre-processor), graphics processors, a central processing unit (CPU), support circuits, digital signal processors, integrated circuits, memory, or any other types of devices suitable for running applications and for data processing (e.g., image, audio, etc.) and analysis. In some aspects, each processor 214, 216, 218 may include any type of single or multi-core processor, mobile device microcontroller, central processing unit, etc. These processor types may each include multiple processing units with local memory and instruction sets. Such processors may include video inputs for receiving image data from multiple image sensors, and may also include video out capabilities.

Any of the processors 214, 216, 218 disclosed herein may be configured to perform certain functions in accordance with program instructions which may be stored in a memory of the one or more memories 202. In other words, a memory of the one or more memories 202 may store software that, when executed by a processor (e.g., by the one or more processors 102), controls the operation of the system, e.g., the safety system. A memory of the one or more memories 202 may store one or more databases and image processing software, as well as a trained system, such as a neural network, a deep neural network, and/or a convolutional deep neural network (CNN), for example, as further discussed herein. The one or more memories 202 may include any number of random access memories, read only memories, flash memories, disk drives, optical storage, tape storage, removable storage, and other types of storage.

In some aspects, the safety system 200 may further include components such as a speed sensor 108 (e.g., a speedometer) for measuring a speed of the vehicle 100. The safety system may also include one or more accelerometers (either single axis or multiaxis) (not shown) for measuring accelerations of the vehicle 100 along one or more axes. The safety system 200 may further include additional sensors or different sensor types such as an ultrasonic sensor, a thermal sensor, one or more radar sensors 110, one or more LIDAR sensors 112 (which may be integrated in the head lamps of the vehicle 100), digital compasses, and the like. The radar sensors 110 and/or the LIDAR sensors 112 may be configured to provide preprocessed sensor data, such as radar target lists or LIDAR target lists. The third data interface (e.g., one or more links 224) may couple the speed sensor 108, the one or more radar sensors 110, and the one or more LIDAR sensors 112 to at least one of the one or more processors 102.

The one or more memories 202 may store data, e.g., in a database or in any different format, that, e.g., indicates a location of known landmarks. The one or more processors 102 may process sensory information (such as images, radar signals, depth information from LIDAR or stereo processing of two or more images) of the environment of the vehicle 100 together with position information, such as a GPS coordinate, a vehicle's ego-motion, etc., to determine a current location and/or orientation of the vehicle 100 relative to the known landmarks and refine the determination of the vehicle's location. Certain aspects of this technology may be included in a localization technology such as a mapping and routing model.

The map database 204 may include any suitable type of database storing (digital) map data for the vehicle 100, e.g., for the safety system 200. The map database 204 may include data relating to the position, in a reference coordinate system, of various items, including roads, water features, geographic features, businesses, points of interest, restaurants, gas stations, etc. The map database 204 may store not only the locations of such items, but also descriptors relating to those items, including, for example, names associated with any of the stored features. In such aspects, a processor of the one or more processors 102 may download information from the map database 204 over a wired or wireless data connection to a communication network (e.g., over a cellular network and/or the Internet, etc.). In some cases, the map database 204 may store a sparse data model including polynomial representations of certain road features (e.g., lane markings) or target trajectories for the vehicle 100. The map database 204 may also include stored representations of various recognized landmarks that may be provided to determine or update a known position of the vehicle 100 with respect to a target trajectory. The landmark representations may include data fields such as landmark type, landmark location, among other potential identifiers. The map database 204 can also include other types of features including point clouds of certain objects or features in the environment, and feature point and descriptors.

Furthermore, the safety system 200 may include a safety driving model (also referred to as a "driving policy model" or simply as a "driving model"), e.g., implemented in an advanced driving assistance system (ADAS) and/or a driving assistance and automated driving system. By way of example, the safety system 200 may include (e.g., as part of the driving model) a computer implementation of a formal model such as a safety driving model. A safety driving model may be or include an implementation of a mathematical model formalizing an interpretation of applicable laws, standards, policies, etc. that are applicable to self-driving (e.g., ground) vehicles. A safety driving model may be designed to achieve, e.g., three goals: first, the interpretation of the law should be sound in the sense that it complies with how humans interpret the law; second, the interpretation should lead to a useful driving policy, meaning it will lead to an agile driving policy rather than an overly-defensive driving which inevitably would confuse other human drivers and will block traffic, and in turn limit the scalability of system deployment; and third, the interpretation should be efficiently verifiable in the sense that it can be rigorously proven that the self-driving (autonomous) vehicle correctly implements the interpretation of the law. An implementation in a host vehicle of a safety driving model, illustratively, may be or include an implementation of a mathematical model for safety assurance that enables identification and performance of proper responses to dangerous situations such that self-perpetrated accidents can be avoided.

A safety driving model may implement logic to apply driving behavior rules such as the following five rules:

- Do not hit someone from behind.

- Do not cut-in recklessly.

- Right-of-way is given, not taken.

- Be careful of areas with limited visibility.

- If you can avoid an accident without causing another one, you must do it.

It is to be noted that these rules are not limiting and not exclusive, and can be amended in various aspects as desired. The rules rather represent a social driving contract that might be different depending on the region, and may also develop over time. While these five rules are currently applicable in most of the countries, they might not be complete and may be amended.

As described above, the vehicle 100 may include the safety system 200 as also described with reference to FIG. 2. The vehicle 100 may include the one or more processors 102 e.g., integrated with or separate from an engine control unit (ECU) of the vehicle 100. The safety system 200 may in general generate data to control or assist to control the ECU and/or other components of the vehicle 100 to directly or indirectly control the driving of the vehicle 100.

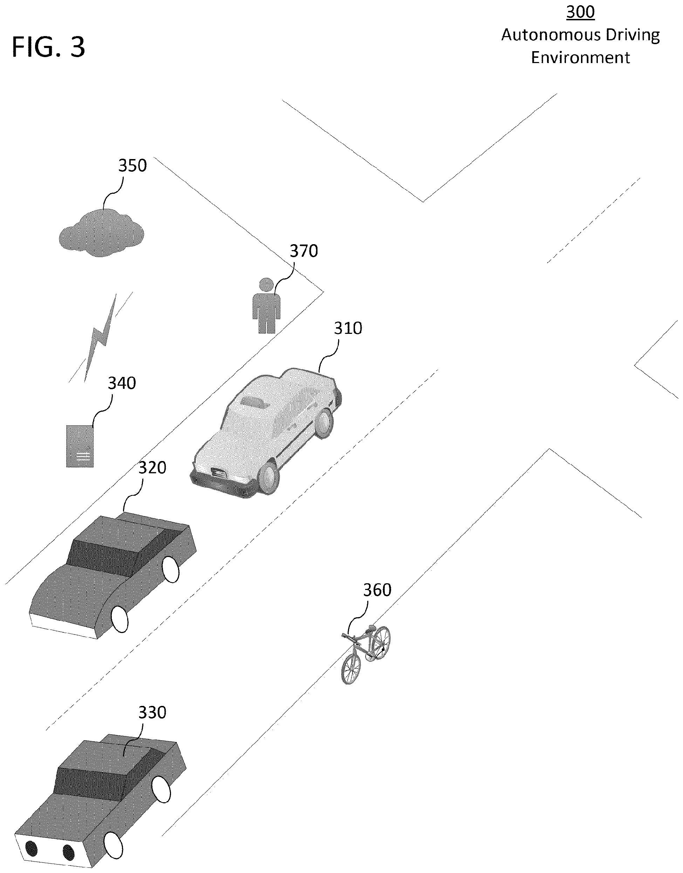

FIG. 3 illustrates an exemplary autonomous driving environment 300. Vehicles 310, 320, 330 may be provided with varying levels of autonomous driving capabilities facilitated through in-vehicle computing systems with logic implemented in hardware, firmware, and/or software to enable respective autonomous driving stacks. Such autonomous driving stacks may allow vehicles to self-control or provide driver assistance to detect roadways, navigate, from one point to another, detect other vehicles and road actors (e.g., pedestrians 370), detect obstacles and hazards (e.g., bicycle 360), and road conditions, and adjust control and guidance of the vehicle accordingly. A connected vehicle may communicate with another vehicle, a roadside unit 340, and/or cloud-based computing system 350.

Examples of Safety Parameters

As further discussed herein, Autonomous Vehicles (AVs) use one or more safety driving models that define safety parameters in accordance with various rules, such as the five driving behaviors rules as noted above, for instance. The defined safety parameters allow AVs to enforce these driving rules by measuring the environment via various sensors, AV systems, image analysis, object detection and classification, etc., and calculating the appropriate safety parameters using this information. For example, two safety parameters that are used in accordance with the aspects as described herein include the longitudinal and lateral distances between vehicles, represented as $d^{long}$ and $d^{lat}$, respectively. These longitudinal and lateral distances are a function of each vehicle's velocity (e.g., the rear (enforcing) vehicle ($v_{rear}$) and the front vehicle ($v_{front}$)), each vehicle's possible longitudinal maximum acceleration $(a_{max,accel}^{long})$ and lateral maximum acceleration $(a_{max,accel}^{lat})$, each vehicle's possible longitudinal minimum deceleration $(a_{min,brake}^{long})$ and possible lateral minimum deceleration $(a_{min,brake}^{lat})$, each vehicle's possible longitudinal maximum deceleration $(a_{max,brake}^{long})$ and lateral maximum deceleration $(a_{max,brake}^{lat})$, and response times of the vehicles (p). The minimum safe longitudinal distance $d_{min}^{long}$ ) and the minimum safe lateral distance $\left(d_{min}^{lat}\right)$ are defined below in accordance with Equations 1 and 2, respectively.

$$\text{Eqn. 1:} \qquad d_{min}^{long} = \left[v_{rear}\,\rho + \frac{1}{2}a_{max,accel}^{long}\,\rho^2 + \frac{\left(v_{rear}+\rho\,a_{max,accel}^{long}\right)^2}{2a_{min,brake}^{long}} - \frac{v_{front}^2}{2a_{max,brake}^{long}}\right],$$

where the longitudinal minimum safe distance $d_{min}^{long}$ applies to rear and front cars driving in the same direction; and

$$\text{Eqn. 2:} \qquad d_{min}^{lat} =$$

$$\mu + \left[\frac{2\,v_1+\rho\,a_{max,accel}^{lat}}{2}\rho + \frac{\left(v_1+\rho\,a_{max,accel}^{lat}\right)^2}{2\,a_{min,brake}^{lat}} - \left(\frac{2v_2-\rho\,a_{max,accel}^{lat}}{2}\rho - \frac{\left(v_2-\rho\,a_{max,accel}^{lat}\right)^2}{2\,a_{min,brake}^{lat}}\right)\right],$$

where the lateral minimum safe distance $d_{min}^{lat}$ applies with notations associated with $car_1$ to the left of $car_2$, and where $\mu$ represents a safe lateral distance measurement, which may be calculated in accordance with any known manner.

Again, these safety parameters depend on the type of the vehicle, loading of the vehicle, age or mechanical conditions of the vehicle, environmental conditions, and choice of driving style (i.e., more assertive or more conservative). If the same parameter values are to be fixed for all vehicles, then a single set of vehicle conditions (e.g., conservative vehicle conditions or conditions that are most likely to avoid accidents) need to be considered to avoid any accidents caused by the AV. However, such an approach would result in an inefficient use of road resources. Thus, sharing of vehicle's safety parameters as discussed herein is beneficial for both safety and efficiency.

The aspects described herein facilitate transmitting and receiving messages among autonomous vehicles and roadside units (RSUs) to share safety parameters. As discussed further below, an RSU may include any suitable type of signage, traffic light, traffic sign, infrastructure, etc. Such RSU's may function in a similar manner as other AVs as discussed herein to receive safety parameters from other AVs, other RSUs, and/or other suitable communication channels (e.g., via cloud computing services), and transmit safety parameters based upon sensor measurements, detected environmental conditions, observed vehicle behavior, etc.

With respect to AVs implementing the aspects as described herein, the AVs may do so using any suitable number and/or type of wireless communications and protocols. For example, the aspects as discussed herein may facilitate the transmission of messages using one or more of the wireless transceivers 208, 210, 212, as discussed above with respect to FIGs. 1 and 2. Thus, the messages that are transmitted and received as discussed herein may be done in accordance with a V2X messaging protocol or any other suitable communication protocol. The RSUs, base stations, etc. may likewise be implemented with transceivers that facilitate transmitting and receiving messages in accordance with any suitable communication protocol.

As an example, the SDM messages may be transmitted and received in accordance with a basic safety message (BSM) protocol, which was developed by SAE International and constitutes a broadcast message for carrying vehicle states and settings such as, for example, location, speed, heading, yaw angle, etc. Continuing this example, the SDM messages that are transmitted and received in accordance with the aspects as described herein may use the J2735 Dedicated Short Range Communications (DSRC) Message Set Dictionary, for example. In an aspect, the safety parameters discussed herein may be transmitted as part of a BSM message by further modifying the BSM communication protocol (e.g., the J2375 message set) to include additional safety parameters and other information that is recognized and used by another AV implementing the various aspects as described herein. Additionally, aspects include the SDM messages including data packets, frames, etc., that may be time stamped contain embedded and/or encoded data indicating the identity of the transmitting vehicle.

Safety Parameter Message Triggering

Again, the safety parameters are transmitted as part of a particular type of message in accordance with any suitable type of communication protocol. The messages may be referred to herein as "Safety Driving Model (SDM)" messages, "safety messages" or simply as "messages." As further discussed below, this SDM message may contain encoded data that indicates how the message should be interpreted by a receiving vehicle. Moreover, the encoded data may include what is referred to herein as "safety parameters," "SDM parameters," or simply "parameters." For instance, a transmitted message may contain encoded data indicating that the message is to notify a receiving vehicle to update its safety parameters, data indicating that safety parameters are being updated for specific vehicle, an action to take, or whether the receiving AV should likewise transmit a message to other AVs. In accordance with various aspects, the messages may be transmitted by an AV, an RSU, etc., when various conditions are met. As discussed herein, unless otherwise specified, the transmission of messages, as well as their receipt, may be made by any suitable component that may reasonably be expected to be operated in an environment that is navigated by at least some AVs. This may include, for instance, AVs, RSUs, base stations providing communications via servers and/or could computing systems, etc.

In an aspect, the SDM messages may be transmitted in a periodic manner. Continuing this example, an SDM message may be transmitted periodically in accordance with a particular predetermined schedule within a particular wireless communication range (e.g., each time a predetermined timer expires, when a predetermined or tracked schedule indicates that the transmission should occur, etc.). The SDM messages may be transmitted in this manner regardless of whether safety parameters have been updated.

As another example, aspects include SDM messages being transmitted when a particular component of the navigated environment changes. This may include, for instance, an AV detecting a new vehicle in its object list, which may need to be informed about safety parameters immediately (rather than waiting for the next periodic message transmission). As an illustrative example, a truck may move into the AVs lane ahead of or behind the AV, prompting the AV to transmit the SDM message.

As a further example, the SDM message may be transmitted in response to the safety parameters of the vehicle changing. This may be as a result of the vehicle detecting a new vehicle/object in the object list that may require the safety parameters to be updated immediately, as noted above. As additional examples, an overloaded truck may have moved into the vehicle's lane, a cyclist may have entered the vehicle's proximity, a Vulnerable Road User (VRU) (e.g., a pedestrian, dog, child, etc.) may enter proximity of the vehicle, an emergency vehicle may enter proximity of the vehicle, etc.

Moreover, in accordance with various aspects, sharing a vehicle's safety parameters, actions, and/or intentions among neighboring vehicles may also enable neighboring vehicles to coordinate and agree on group-suitable safety parameters for the vehicles in their proximity. In such a case, a vehicle may want to update safety parameters to align with agreed-upon group safety parameters, and as a result the safety parameter change will be triggered, causing the SDM message to be transmitted.

Efficient Transmission of Safety Parameters with reduced Overhead

In an aspect, the transmitted SDM messages need not contain the actual values of the safety parameters to conserve data and processing. Instead, the messages may contain an indication regarding a range, scale, or factor by which the current or existing safety parameters should be modified. Furthermore, if a vehicle is transmitting safety parameters to the same RSU or the cloud, it may include only safety parameters which have changed from the previous reporting in excess of a predetermined threshold. In this way, transmission overhead may be reduced by reducing the number of bits needed to represent safety parameter values in transmitted messages.

Receiving Safety Parameters for other Vehicles

In an aspect, a vehicles' safety parameter values may be offloaded and/or maintained in an external computing system such as the cloud, for instance. In such a case, aspects include a vehicle transmitting a message indicating safety parameter value changes to the cloud via an RSU whenever the vehicle's safety parameter values change (e.g., in any way, in excess of a threshold amount, etc.). Continuing this example, a vehicle traveling on the road may "pull" the safety parameters of other vehicles traveling in the vicinity (e.g., within a threshold distance or radius) from the cloud by sending a message to a nearby RSU with the vehicle's identities, which may be determined by the requesting vehicle in accordance with known techniques.

Moreover, the cloud or RSU may have recommended safety parameters for a particular region/proximity. The recommended safety parameters may be calculated, for example, based on the environmental conditions and/or a majority of other vehicles' safety parameters that are received over a predetermined recent time window. The recommended safety parameters may also be calculated based on the safety parameters received from other vehicles over a longer previous time period, which may be adjusted depending upon the particular location or application.

SDM Message Triggering using the Longitudinal Minimum Safe Distance

The longitudinal minimum distance used in accordance with the aspects described herein may be defined as part of the vehicle's SDM. For example, the longitudinal minimum distance may be defined as $d_{min}^{long}$ described in Equation 1 above. This longitudinal minimum distance may alternatively be abbreviated herein as "dlo_min," and may be used by an AV to avoid hitting another vehicle from behind while traveling in the same direction. Additionally, dlo_min may be implemented to prevent head-on collisions by two vehicle traveling in opposite directions.

For example, the aspects described herein enable a vehicle to transmit an SDM message whenever another vehicle is within a longitudinal distance that is less than the dlo_min distance. In such a scenario, aspects include the vehicle transmitting an SDM message that includes various types of information to warn the surrounding vehicles. For instance, the information included in such an SDM message may include a longitudinal minimum distance warning (longitudinal danger), the heading of the vehicle sending the message, the heading of the "violating" vehicle (i.e., the vehicle that has violated the dlo_min), a temporary identity of the vehicle sending the message (e.g., a V2X identity of the vehicle, color, make, etc.). The information included in the transmitting message may also include, for example, one or more actions to be taken by the vehicle sending the message (e.g., acceleration/deceleration that is less than maximum possible acceleration/decelerations, changing lanes, etc.).

Aspects include the transmission of the SDM message being triggered based upon an additional safety buffer that may be added to the defined dlo_min as an added safety factor. In other words, instead of dlo_min defining the threshold for transmitting the SDM message, aspects include the SDM message transmission being triggered at distance of (a*dlo_min), in which the constant and 'a' may have any suitable value to scale the dlo_min threshold, such as 1.1, 1.25, 1.5, etc. This scaling factor 'a' may be defined in accordance with a user setting and/or as part of the SDM based upon other factors such as current environmental conditions, traffic density, the type of vehicle, etc. Again, the use of the dlo_min safety parameter as a trigger condition for transmitting SDM messages may be made in two scenarios that are provided by way of example and not limitation, which include vehicles traveling in the same direction and vehicles travelling in opposite directions. Each of these scenarios is discussed in further detail below.

As an illustrative example for vehicles travelling in the same direction, aspects include a front vehicle receiving an SDM warning message that is transmitted by a following vehicle. The front vehicle may then generate and transmit a subsequent SDM message upon receiving the SDM warning message from the following vehicle. The subsequent SDM message may include encoded data including information that is based on the particular scenario to alleviate the danger. For instance, if the front vehicle is traveling below the maximum speed limit for the road segment and the road segment is clear of vehicles that allow the front vehicle to reach the speed limit, the front vehicle may include information in the subsequent SDM message indicating an acceleration value that is being executed to reach the maximum speed limit.

As another illustrative example using the same scenario described above, if traffic is moving slowly and the front vehicle cannot accelerate, then the subsequent SDM message may include a deceleration value. Continuing this example, in the event that the following vehicle receives subsequent SDM messages with acceleration/deceleration value(s) from the front vehicle, the following vehicle may take the appropriate action based upon the feedback provided in the subsequent SDM message. For instance, the following vehicle may then decelerate or change lanes to maintain the dlo_min distance.

With respect to vehicles traveling in opposite directions, such a scenario represents the most dangerous situation for both vehicles. Aspects include mitigating the danger in this scenario by a vehicle (i.e., a "receiving vehicle") receiving an SDM message from another vehicle (i.e., a "transmitting vehicle") and transmitting a subsequent SDM message with encoded data representing specific types of information directed to this purpose. As illustrative examples, the receiving vehicle may transmit an SDM message including its current deceleration value. Additionally or alternatively, the subsequent SDM message transmitted by the receiving vehicle may include information regarding any suitable type of maneuver (e.g., lane change with future lane number) that the receiving vehicle is performing to avoid a head on collision with the transmitting vehicle. Upon receiving the subsequent SDM message from the receiving vehicle, the transmitting (i.e., originating) vehicle may process the encoded data to perform an appropriate action(s) (e.g., deceleration, lane change, etc.).

SDM Message Triggering using the Lateral Minimum Safe Distance

The lateral minimum distance used in accordance with the aspects described herein may be defined as part of the vehicle's SDM. For example, the lateral minimum distance may be defined as $d_{min}^{lat}$ described in Equation 2 above. This lateral minimum distance may alternatively be abbreviated herein as "dla_min," and may be used by an AV to avoid hitting another vehicle traveling in adjacent lanes. Additionally, dla_min may be implemented to prevent collisions in a lateral direction for vehicles travelling in adjacent lanes.

To provide an illustrative example, if two vehicles are traveling such that their lateral distance is less than a threshold as defined by in dla_min, their longitudinal distance is less than that as defined by dlo_min, and driving in the middle of their respective lanes, one of the vehicles (i.e., the transmitting vehicle) may transmit an SDM message that includes encoded data to warn any surrounding vehicles. As an example, this encoded information may include a lateral minimum distance warning (laterally dangerous situation), the heading of the transmitting vehicle, the heading of the vehicle that has violated the lateral minimum distance threshold, the direction of the dla_min (i.e., the nearing to the left or right of the transmitting vehicle), a temporary identity of the vehicle (V2X id of the vehicle, color, make, etc.), etc.

As noted above for the longitudinal minimum distance, aspects likewise include the SDM message being triggered based upon a safety buffer that may be added to the defined dla_min as an added safety factor. For instance, aspects include the SDM message transmission being triggered at distance of (a*dla_min), in which the constant and 'a' may have any suitable value to scale the dla_min threshold, such as 1.1, 1.25, 1.5, etc. Again, this scaling factor 'a' may be defined in accordance with a user setting and/or as part of the SDM based upon other factors such as current environmental conditions, traffic density, the type of vehicle, specific scenarios regarding safety, etc. For example, vehicles in adjacent lanes traveling in opposite directions may have a higher 'a' value than vehicles traveling in the same direction.

Upon receiving the SDM message, a receiving vehicle may send a subsequent SDM message with encoded data that may be received by other vehicles, including the originating (i.e., the initial or previously-transmitting) vehicle. As illustrative examples, a subsequent SDM message may include the lateral acceleration the receiving vehicle is using to reach zero μ-lateral velocity in the middle of its lane. As additional illustrative examples, the subsequent SDM message may include data related to other suitable maneuvering decisions that the receiving vehicle is executing, such as a longitudinal deceleration (slowing down), a lane change, longitudinal acceleration (going faster), etc.

SDM Message Triggering Related to Intersections, Roundabouts, and Merging

The SDM may additionally define the right-of-way among various vehicles while navigating an environment. Aspects include using these right-of-way rules in conjunction with other safety parameters such as the dlo_min distance discussed above. The right-of-way rules may be particularly important when two or more vehicles need to safely navigate an intersection or merge into traffic with one another. For example, to avoid accidents at roundabouts, intersections, or while merging lanes in the absence of smart intersection management facilities, the vehicle with right-of-way (according to SDM definitions) for a particular road geometry may transmit an SDM message with encoded data. The transmission of this message may function as a warning message and be triggered, for instance, when the transmitting vehicle is within the dlo_min distance from an intersecting point of lanes. Continuing this example, the SDM message may include a time at which the transmitting vehicle will arrive at the point of intersection of the lanes based upon it current velocity and acceleration. The SDM message may additionally or alternatively include an intended action to be taken by the transmitting vehicle (e.g., continue in the present direction as indicated by the road geometry, merge, or exit with the acceleration/deceleration values that are less than maximum possible values, etc.).

The other vehicles already have information in accordance with their own SDM that indicates the right-of-way of the intersection, merging lanes, roundabout, etc. Thus, aspects include the SDM message including data encoded to indicate the velocity, location, heading, acceleration, etc. of the transmitting vehicle. Thus, other vehicles with less priority may receive multiple warning messages from several vehicles that have the right-of-way (e.g., vehicles in the right-of-way lane). Continuing this example, a lower priority vehicle may then transmit a subsequent SDM message that functions as a warning message to other vehicles, adjust its own velocity, longitudinal acceleration/longitudinal deceleration, and merge with the new lane. When the lower priority vehicle merges in this manner, it would also ensure that the SDM longitudinal minimum distance 'dlo_min' is possible with respect to both the front vehicle and the rear vehicle (with respect to the lower priority transmitting vehicle) in the new lane. In the event that this is not possible, then the lower priority transmitting vehicle may decelerate and possibly come to a complete stop until the lower priority vehicle can safely merge in a manner that satisfies the dlo_min distance between both the front and the rear vehicles.

As an additional example, to avoid accidents at intersections without traffic lights, stop signs, or smart intersection management facilities, each vehicle may transmit a respective SDM message that includes any suitable type of information regarding the current status of each vehicle. For instance, each vehicle may, upon approaching an intersection (e.g., within a predefined distance) transmit an SDM message including encoded data indicative of that vehicle's location, velocity, heading, intention (left turn, right turn, continue straight), etc.

Thus, each vehicle approaching an intersection may determine its own distance from the intersection and use received SDM message data to identify vehicles with paths that would potentially intersect its own path. Using the SDM message data, aspects include one or more of the vehicles estimating the distances of other vehicles from a point of intersection of paths and the time required for those vehicles to reach the point of intersection of each of their paths. In the event that a vehicle is closer to the point of intersection, then that vehicle has the priority or right-of-way, and that vehicle would continue along the initially planned course and velocity while transmitting an SDM message that functions as an intersection crossing warning message. In various aspects, the intersection crossing warning message may include any suitable type of information that functions to inform other vehicles of the status of the vehicle transmitting the SDM message. For instance, the SDM message may include encoded data that facilitates an intersection crossing warning message identifying the time at which the transmitting vehicle will be at the point of intersection of paths, any change in its own actions (e.g., speed, acceleration/deceleration), etc.

As another example, in the event that another vehicle on the intersecting path is closer to the point of intersection, then aspects include the transmitting or originating vehicle adjusting its velocity and acceleration to meet the SDM longitudinal minimum distances dlo_min with the other vehicle at the point of intersection of paths. Upon doing so, the originating or transmitting vehicle may transmit a subsequent SDM message that updates the velocity and acceleration/deceleration values (e.g., in the next periodic SDM message transmission or when the next SDM message transmission is otherwise triggered).

SDM Message Triggering Related to Lane Changes

In an aspect, to avoid accidents during a lane change, the vehicle that wants to change lanes (i.e., the originating vehicle) measures the distance between the front and rear vehicles in the target lane (i.e., the lane to be changed to) using its own sensors and SDM message transmissions (e.g., via V2X broadcasts) from the front and rear vehicles in the target lane (or one vehicle, when only one is proximate in the target lane). Using this information, the originating vehicle may calculate the "hypothetical" SDM longitudinal minimum distances dlo_min between the originating vehicle and the front and rear vehicles in the target lane in the event that the originating vehicle moves into the target lane as intended.

In the event that the originating vehicle determines that the gap between the front and back vehicles is larger than sum of the hypothetical SDM minimum distances, then the originating vehicle may calculate the velocity, acceleration/deceleration, and timing of the lane change to ensure that the appropriate minimum distances dlo_min are maintained between both the front and the rear vehicles in the target lane. Aspects include the originating vehicle transmitting an SDM message that indicates that the originating vehicle is changing lanes and the target lane as part of the encoded safety parameters.

However, in the event that the gap between the originating vehicle and the front and rear vehicles in the target lane is smaller than the sum of SDM minimum distances, aspects include the originating vehicle transmitting an SDM message as a warning message, which may include any suitable type of information to warn other vehicles (e.g., the front and rear vehicle in the target lane) about this scenario. For instance, the SDM message may include encoded data indicating a lane change minimum distance warning (longitudinal danger), the time at which the originating vehicle would start the lane change, a temporary identity of the front and rear vehicles in the target lane (e.g., V2X identification of the vehicles, color, make, etc.), the originating vehicle's own actions (e.g., acceleration/deceleration value(s) that is/are less than maximum possible values), etc.

Continuing this example, aspects include the front and rear vehicles receiving an SDM warning message for the lane change, and transmitting respective subsequent SDM messages. These subsequent SDM messages may include encoded data indicating various actions and/or the status of each transmitting vehicle. For example, the encoded data may include an indication that the lane change of the originating vehicle into the target lane would be safely allowed.

As another example, the minimum distance requirements dlo_min and dla_min may not be met in the event that the originating vehicle hypothetically performs the lane change. In such a case, the rear and front vehicles in the target lane receive the SDM message indicating a request for the lane change from the originating vehicle, and respond with subsequent SDM messages indicating their actions to accommodate the request. The subsequent SDM messages may indicate, for each of the front and rear vehicles, respectively, actions to safely accommodate the lane change (e.g., acceleration/deceleration, or no change in speed). In the event that the front and rear vehicles can perform appropriate actions to accommodate the lane change of the originating vehicle and ensure that the minimum distances dla_min and dlo_min are not violated, then the lane change can occur. Otherwise, the lane change cannot happen safely and the originating vehicle does not perform the lane change maneuver. In the event that the front and rear vehicles do not respond in a timely manner (e.g., upon expiration of a predetermined time period), or the front and rear vehicles do not change their velocity, acceleration/deceleration, etc., then aspects include the originating vehicle slowing down and re-attempting the SDM message transmission and lane change maneuver with different vehicles.

SDM Message Triggering using Roadside Infrastructure

Again, the aspects as described herein are not limited to the transmission of SDM messages via autonomous vehicles, and SDM messages may also be transmitted and/or received from other sources such as base stations, the cloud, roadside infrastructure (e.g., roadside units (RSUs)), etc. In accordance with such aspects, RSUs may implement sensing and processing capabilities and thus function to transmit SDM messages that include encoded data representing environment and context-dependent safety parameters and warnings to vehicles in the vicinity (e.g., a predetermined radius, range, etc.) The environment and context-dependent safety parameters may include any suitable type of information that may be relevant to and/or implemented via one or more other vehicles receiving the SDM messages that include this information, which may include any of the aforementioned information described above.

For instance, the environment and context-dependent safety parameters may include absolute maximum permissible speed, acceleration, allowed lane changes, etc. The roadside infrastructure may transmit SDM messages that function as warning messages based on, for instance, sensor measurements and/or data received from surrounding vehicles. For example, if the inter-vehicle longitudinal separation between two vehicles is small (e.g., less than a predetermined minimum value such as dlo_min) the RSU may transmit an SDM message that functions as a warning message to those vehicle specifying their IDs and the type of warning (e.g., longitudinal minimum distance or lateral minimum distance, etc.). The RSU may additionally or alternatively transmit SDM messages that function as warnings for other dangerous situations between vehicles, other road users (e.g., pedestrians and cyclists), etc.

Hardware and Software Implementation

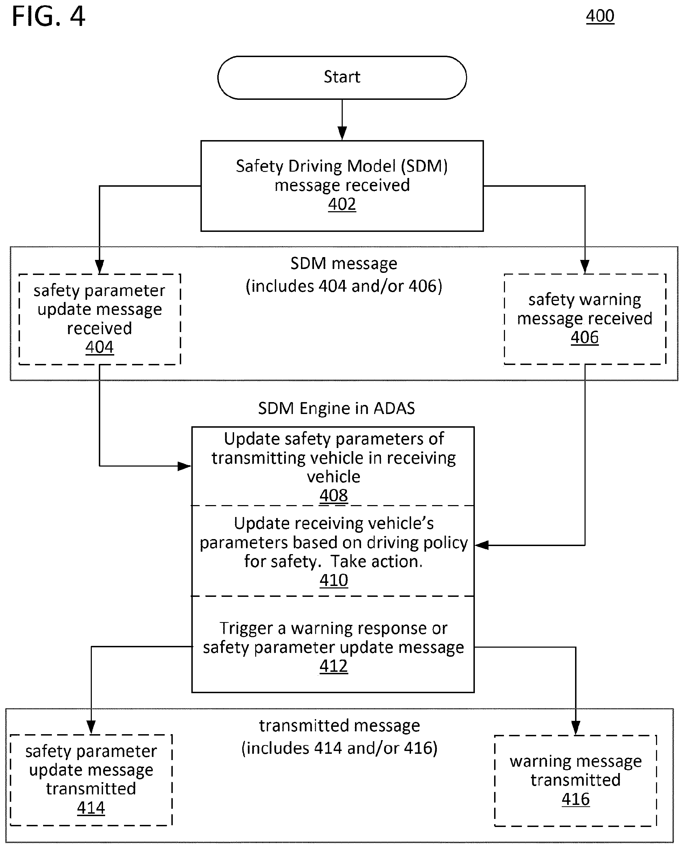

FIG. 4 illustrates an exemplary block flow diagram in accordance with various aspects of the present disclosure. With reference to FIG. 4, the block flow diagram 400 may be a computer-implemented method executed by and/or otherwise associated with one or more processors and/or storage devices. These processors and/or storage devices may be, for instance, one or more components of the vehicle safety system 200, or any other suitable components of the vehicle in which the aspects described herein are implemented, as discussed herein. Moreover, in an embodiment, the block flow diagram 400 may be performed via one or more processors executing instructions stored on a suitable storage medium (e.g., a non-transitory computer-readable storage medium) such as the one or more processors 102 and/or an ECU of the vehicle executing instructions stored in the memory 202, for instance.

In an aspect, the block flow diagram 400 may describe an overall operation to receive, decode, encode, process, and/or transmit SDM messages to and from other vehicles and/or other suitable devices (e.g., the cloud, base stations, RDUs, etc.) in accordance with various aspects of the present disclosure. Aspects may include alternate or additional steps that are not shown in FIG. 4 for purposes of brevity, and may be performed in a different order than the example steps shown in FIG. 4. For example, FIG. 4 shows a process in which a vehicle both receives and transmits an SDM message, although it is understood that a vehicle may transmit an SDM message, receive an SDM message, or both, at various times and in response to various triggering conditions as discussed herein.

Moreover, the transmission and reception of SDM messages may be performed in accordance with any suitable type of communication protocol, as noted above, and may be performed via any suitable hardware (e.g., transceivers 208, 210, 212) that may work in conjunction with the one or more processors 102 and/or an ECU of the vehicle as discussed herein (e.g., the one or more processors 102 and/or the ECU may instruct, control, or otherwise trigger the transmission of SDM messages via the transceivers 208, 210, 212). The block flow diagram 400 is shown in FIG. 4 with the SDM message processing being performed by an SDM engine, which may be part of an autonomous vehicle's ADAS system, and thus these tasks may be performed by the one or more processors 102 and/or the vehicle's ECU as discussed herein with reference to FIG. 2, or any other suitable hardware processors. Furthermore, although FIG. 4 is shown with the SDM engine performing the SDM message data processing operations, this is by way of example and not limitation. Aspects include the SDM message functions being performed by any suitable components of the particular device in which the SDM message generation, transmission, receipt, and/or processing is implemented, such as an AV, an RSU, a base station, or other suitable component.

As shown in FIG. 4, the flow begins when an SDM message is transmitted by an originating or transmitting vehicle. This may include a transmission of an SDM message as is further discussed below with reference to blocks 414, 416. In the event that an SDM message is received (block 402), the SDM message content may be decoded to identify the particular type of SDM message. For instance, the content of an SDM message may indicate whether the SDM message is to function as an SDM parameter update message (block 404), as an SDM warning message (block 406), or both, as discussed herein.

For example, the code shown below in Table 1 shows that an SDM parameter update message is identified as "SDMparameters," whereas an SDM warning messages is identified as an "SDMmindiswarningmessage" in this example. As discussed above, the content of the SDM message, which is indicated by the type of SDM message, is a function of the various conditions that trigger the SDM message being transmitted as discussed herein. Thus, as shown in FIG. 4, an SDM parameter update message (block 404), when identified, indicates that SDM parameters are to be updated for the transmitting vehicle (in the receiving vehicle's SDM) (block 408). This may be the case, for instance, when the transmitting vehicle is indicating a change in one or more safety parameters associated with the transmitting vehicle from previous values. Again, examples of such safety parameter updates include an updated velocity value, an updated acceleration value, an updated deceleration value, etc. Additional or alternative SDM parameters that are transmitted as part of an SDM parameter update message in this manner are also shown in Table 1 in the section following "SDMParameters ::= SEQUENCE."

Continuing this example, the SDM warning message (block 406) may indicate that the receiving vehicle should update its own SDM parameters in response to a safety concern or more immediate danger (block 410). In an aspect, the encoded data included in the SDM warning message may be identified as shown in Table 1 in the section following "SDMMinDisWarningMessage ::= SEQUENCE." Moreover, the type of SDM warning message may be further identified in accordance with the section following "SDMWarningtype ::= ENUMERATED," as shown in Table 1.

As an illustrative example, if the SDMmindiswarningmessage is transmitted as a result of a violation of the aforementioned dlo_min of dla_min distance thresholds by the vehicle receiving the SDM warning message, then the receiving vehicle may adjust its velocity, acceleration, deceleration, etc., to attempt to remedy this violation (block 410). Additionally or alternatively, the receiving vehicle may take an appropriate action and update its SDM safety parameters based upon that action, as described above (block 410).

Once the receiving vehicle updates its own SDM safety parameters, aspects include the receiving vehicle also transmitting a subsequent SDM message. The transmission of this SDM message and the type of message may be triggered based upon the satisfaction of the various conditions as noted herein, which may also apply to the transmission of the SDM message that was received (blocks 404, 406). For example, the SDM message may be transmitted in accordance with a schedule that indicates a time for a next periodic transmission to occur, when another vehicle is identified in the transmitting vehicle's object list. In the example as shown in FIG. 4, the SDM message is transmitted in response to one or more safety parameters associated with the transmitting vehicle changing (block 410) or the SDM message being received from the transmitting vehicle. As shown in FIG. 4, the subsequent SDM message that is transmitted by the receiving vehicle may include safety parameters identifying the type of SDM message as an SDM parameter update message (block 414), as an SDM warning message (block 416), which may indicate changes to the receiving vehicle's SDM parameters, actions executed by the receiving vehicle, or both. This process of transmitting and receiving SDM messages in this manner may be repeated for any suitable number of vehicles in a particular navigated environment. In this way, vehicles may share their SDM parameters and actions as feedback with other vehicles in a collaborative manner to increase driving safety.

Table 1 represents example code represented in the ASN.1 (Abstract Syntax Notation One) language, and which is associated with a facilities layer message format that may be implemented by a vehicle, base station, RSU, etc., to implemented the transmission and receipt of SDM messages as described herein. In an aspect, the code shown in Table 1 may be associated with the execution of one or more software algorithms and/or applications, and may be executed or otherwise run by one or more processors (e.g., the one or more processors 102) to generate, transmit, process, and/or receive SDM messages as discussed herein.

In the example shown in Table 1, the SDM message format is in accordance with the basic safety message (BSM) protocol implementing the SAE J2735 Dedicated Short Range Communications (DSRC) Message Set Dictionary. However, the aspects as described herein are not limited to this particular example implementation, protocol, or message formatting, and any suitable type of communication protocol may be implemented to transmit and receive SDM messages.

Further, the code shown in Table 1 includes underlined portions that represent added data elements and data fields to the BSM messaging protocol to facilitate the functional realization of the aspects as described herein. However, the aspects as described herein are not limited to the information provided in the code presented in Table 1 below of the modification of a particular type of messaging format or communication protocol. Instead, the aspects described herein may include the use of any suitable type of communication messaging protocol as well as any suitable type of SDM safety parameters to be included in SDM messages. Moreover, the aspects described herein may implement any suitable SDM warning message sequence having any suitable content, any suitable type of enumerated SDM warning messages. The aspects described herein may also implement any other suitable type of encoded data for use in the transmission of SDM messages in addition to or instead of the example encoded data as shown in Table 1. For instance, the SDM messages as discussed herein may include any suitable type of SDM safety parameters, warning message types, etc.

TABLE 1

-- Facilities layer message formats

MessageTypes MESSAGE-ID-AND-TYPE ::= {

{ BasicSafetyMessage          IDENTIFIED BY basicSafetyMessage   } |

{ MapData                     IDENTIFIED BY mapData              } |

```
{ SPAT                    DENTIFIED BY signalPhaseAndTimingMessage } |

{ CommonSafetyRequest     IDENTIFIED BY commonSafetyRequest   } |

{ EmergencyVehicleAlert   IDENTIFIED BY emergencyVehicleAlert } |

{ IntersectionCollision   IDENTIFIED BY intersectionCollision } |

{ NMEAcorrections         IDENTIFIED BY nmeaCorrections       } |

{ ProbeDataManagement     IDENTIFIED BY probeDataManagement   } |

{ ProbeVehicleData        IDENTIFIED BY probeVehicleData      } |

{ RoadSideAlert           IDENTIFIED BY roadSideAlert        } |

{ RTCMcorrections         IDENTIFIED BY rtcmCorrections       } |

{ SignalRequestMessage    IDENTIFIED BY signalRequestMessage } |

{ SignalStatusMessage     IDENTIFIED BY signalStatusMessage  } |

{ TravelerInformation     IDENTIFIED BY travelerInformation  } |

{ PersonalSafetyMessage   IDENTIFIED BY personalSafetyMessage } |

{ SDMParameters           IDENTIFIED BY SDMparameters              } |

{ SDMMinDisWarningMessage  IDENTIFIED BY SDMmindiswarningmessage      } |

{ TestMessage02 IDENTIFIED BY testMessage02 } |

{ TestMessage03 IDENTIFIED BY testMessage03 } |
```

{ TestMessage04 IDENTIFIED BY testMessage04 } |

{ TestMessage05 IDENTIFIED BY testMessage05 } |

{ TestMessage06 IDENTIFIED BY testMessage06 } |

{ TestMessage07 IDENTIFIED BY testMessage07 } |

{ TestMessage08 IDENTIFIED BY testMessage08 } |

{ TestMessage09 IDENTIFIED BY testMessage09 } |

{ TestMessage10 IDENTIFIED BY testMessage10 } |

{ TestMessage11 IDENTIFIED BY testMessage11 } |

{ TestMessage12 IDENTIFIED BY testMessage12 } |

{ TestMessage13 IDENTIFIED BY testMessage13 } |

{ TestMessage14 IDENTIFIED BY testMessage14 } |

{ TestMessage15 IDENTIFIED BY testMessage15 } ,

...

}

SDMParameters  ::= SEQUENCE {

        id               TemporaryID,

        msgCnt           MsgCount,

```
        timestamp        DSecond,                    -- (0-65535) units of milliseconds

        sdmmaxaccelSet   AccelerationSet4Way  OPTIONAL, -- SDM maximum
acceleration

        sdmmaxdecelSet  AccelerationSet4Way    OPTIONAL, -- SDM maximum
deceleration

        responsetime  Responsetime100ms        OPTIONAL,

        ...

}Responsetime100ms ::= INTEGER(0..100)

        -- Maximum possible response time is 100*100ms = 10 seconds

SDMMinDisWarningMessage  ::= SEQUENCE {

id           TemporaryID,

msgCnt      MsgCount,

        timestamp           DSecond,          -- (0-65535) units of milliseconds

        sdmwarningtype       SDMWarningtype,

        sdmaction            AccelerationSet4Way  OPTIONAL,

                             -- SDM actions - acceleration/deceleration

        sdmaddiaction        LaneID OPTIONAL,

                             -- additional action - new lane ID
```

```
        timetointsection        TimeToIntersect OPTIONAL,

                                 -- time to reach intersection of lanes for (4)

        startlanechange          StartLaneChange OPTIONAL,

                                 -- time at which lane change starts for (5)

        frontid                  TemporaryID OPTIONAL,

                                 -- temporary id of the front vehicle for (5)

        rearid                   TemporaryID OPTIONAL,

                                 -- temporary id of the rear vehicle for (5)

        lanechangeallowd         LaneChangeAllowd OPTIONAL,

                                 -- Lane change allowed or not for (7)

        ...

}

SDMWarningtype  ::= ENUMERATED {

        longimindistdangersamedir           (0),

        --longitudinal minimum distance danger (same direction)

        longimindistdangeroppodir           (1),

        --longitudinal minimum distance danger (opposite direction)
```

latermindistdanger                    (2),

--lateral minimum distance danger (right side)

latermindistdanger                    (3),

--lateral minimum distance danger (left side)

roundaboutormergingln                (4),

--round about or merging lane warning

lanechange                            (5),

--lane change minimum distance warning

unmanagedintersect                    (6),

--unmanaged intersection warning

response                              (7),

-- response to the SDM warning messages

} -- 3 bit messages


TimeToIntersect   ::=  INTEGER (0..30000)

--time to reach the intersecting points of paths in ms

<u>LaneChangeAllowd  ::= BOOLEAN</u>

<u>-- true : lane change allowed and safe</u>

<u>-- false: lane change is not allowed and unsafe</u>

The techniques of this disclosure may also be described in the following examples.

Example 1. A system of a collaborative Autonomous Vehicle (AV) Safety Driving Model (SDM) system, comprising: at least one processor; and a non-transitory computer-readable storage medium including instructions that, when executed by the at least one processor, cause the at least one processor to: generate, in response to a condition being satisfied, an SDM message including encoded data representing a warning or a safety parameter; and cause a transceiver to transmit the generated SDM message.

Example 2. The system of example 1, wherein the SDM message is a safety parameter update message that includes an indication that a safety parameter is to be updated.

Example 3. The system of example 2, wherein the system is associated with a transmitting vehicle, and the SDM message includes encoded data indicating that a safety parameter associated with the transmitting vehicle is updated from a previous value.

Example 4. The system of example 3, wherein the safety parameter updated from the previous value is based on an updated velocity value, an updated maximum acceleration value, or an updated maximum deceleration value.

Example 5. The system of example 1, wherein the system is associated with a transmitting vehicle, and the condition that is satisfied is selected from a group of conditions consisting of: a schedule that indicates a time for a next periodic SDM message transmission to occur; a new vehicle, object, or vulnerable road user identified in a vehicle object list; a change in a safety parameter associated with the transmitting vehicle; and another SDM message is received from another vehicle.

Example 6. The system of example 1, wherein the system is associated with a transmitting vehicle, the SDM message is a warning message, and the condition that is satisfied is selected from a group of conditions consisting of: another vehicle is driving within a lane occupied by the transmitting vehicle and is separated from the transmitting vehicle by a distance that is less than a longitudinal minimum safe distance as defined by safety parameters of the transmitting vehicle; and another vehicle is driving within a lane adjacent to the transmitting vehicle and is separated from the transmitting vehicle by a distance that is less than a lateral minimum safe distance as defined by safety parameters of the transmitting vehicle.

Example 7. The system of example 1, wherein the system is associated with a transmitting vehicle, the SDM message is an update message, the condition that is satisfied is a lane change by the transmitting vehicle, and the safety parameter is a lane change minimum distance of the transmitting vehicle, a time at which the transmitting vehicle would the lane change, a temporary identity of a front vehicle or a rear vehicle in a target lane of the transmitting vehicle, or an acceleration/deceleration value of the transmitting vehicle.

Example 8. The system of example 1, wherein the system is associated with a transmitting vehicle, the SDM message is an update message, the condition that is satisfied is the transmitting vehicle will enter a roundabout, merge lanes, or cross an intersection, and the safety parameter is a time at which the transmitting vehicle will enter the roundabout, merge lanes, or cross the intersection, and an intended action of the transmitting vehicle.

Example 9. The system of example 1, wherein the processor is configured to generate the SDM message in accordance with a Vehicle-to-Everything (V2X) or a Vehicle-to-Vehicle (V2V) communication protocol.

Example 10. The system of example 1, wherein the instructions further cause the processor to generate the SDM message with a value of the safety parameter encoded as a range, scale or factor.

Example 11. The system of example 1, wherein the instructions cause the at least one processor to: generate the SDM message including the safety parameter when a value of the safety parameter has changed since a previous reporting in excess of a predetermined threshold.

Example 12. The system of example 1, wherein: the safety parameter is an agreed-upon vehicle group safety parameter; and the instructions cause the at least one processor to cause the transceiver to transmit the SDM message including encoded data representing the agreed-upon vehicle group safety parameter.

Example 13. The system of example 1, wherein the component is associated with a transmitting vehicle, and the instructions cause the at least one processor to: generate the SDM message to be transmitted to a cloud-based system via a Road Side Unit (RSU) to be stored in the cloud-based system, wherein the warning or safety parameter transmitted in the SDM message is subsequently obtainable from the cloud-based system by another vehicle.

Example 14. The system of example 1, wherein the instructions cause the at least one processor to: generate a request to a cloud-based system to provide recommended safety parameters based on region or previous safety parameters stored in the cloud-based system; and cause the transceiver to transmit the request to the cloud-based system.

Example 15. The system of example 1, wherein the system is associated with a receiving vehicle, and the instructions further cause the processor to: cause an update of the receiving vehicle, a safety parameter of a transmitting vehicle encoded in an SDM message received by the receiving vehicle from the transmitting vehicle.

Example 16. The system of example 15, wherein the instructions further cause the processor to: determine a longitudinal minimum safe distance or a lateral minimum safe distance, as defined by safety parameters, between the receiving vehicle and the transmitting vehicle based on the updated safety parameter.

Example 17. The system of example 16, wherein the instructions further cause the processor to: generate, in response to a determination that the receiving vehicle and the transmitting vehicle are closer than the longitudinal minimum safe distance or the lateral minimum safe distance, a subsequent SDM message including encoded data representing a warning; and cause the transceiver to transmit the generated subsequent SDM message.

Example 18. The system of example 1, wherein the instructions further cause the processor to: generate a subsequent SDM message including encoded data representing a warning or a safety parameter in response to an SDM message received from another vehicle; and cause a transceiver to transmit the generated subsequent SDM message.

Example 19. The system of example 1, wherein the SDM message is a broadcast SDM message.

Example 20. A Road Side Unit (RSU) of a collaborative Autonomous Vehicle (AV) Safety Driving Model (SDM) system, comprising: at least one processor; and a non-transitory computer-readable storage medium including instructions that, when executed by the at least one processor, cause the at least one processor to: determine, based on safety parameters received from vehicles neighboring one another, a longitudinal minimum safe distance or a lateral minimum safe distance between the neighboring vehicles; if the neighboring vehicles are traveling at less than the longitudinal minimum safe distance or the lateral minimum safe distance, generate an SDM message including encoded data representing a warning or a safety parameter; and cause a transceiver to transmit to the neighboring vehicles.

Example 21. An Autonomous Vehicle (AV) comprising the component of example 1.

Example 22. A non-transitory computer readable medium of an Autonomous Vehicle (AV) operating in accordance with a collaborative AV Safety Driving Model (SDM), having stored thereon software instructions that, when executed by a processor, cause the processor to: generate in response to a condition being satisfied, an SDM message including encoded data representing a warning or a safety parameter; and transmit, by a transceiver, the generated SDM message.

Example 23. The non-transitory computer readable medium of example 22, wherein the software instructions further cause the processor to: receive, by the transceiver from a neighboring vehicle, another SDM message including encoded data representing a warning or a safety parameter of the neighboring vehicle.

Example 24. A system of a collaborative Autonomous Vehicle (AV) Safety Driving Model (SDM) system, comprising: a processing means for generating, in response to a condition being satisfied, an SDM message including encoded data representing a warning or a safety parameter; and a transceiving means for transmitting the generated SDM message.

Example 25. The system of example 24, wherein the SDM message is a safety parameter update message that includes an indication that a safety parameter is to be updated.

Example 26. The system of any of examples 24-25, wherein the system is associated with a transmitting vehicle, and the SDM message includes encoded data indicating that a safety parameter associated with the transmitting vehicle is updated from a previous value.

Example 27. The system of any of examples 24-26, wherein the safety parameter updated from the previous value is based on an updated velocity value, an updated maximum acceleration value, or an updated maximum deceleration value.

Example 28. The system of any of examples 24-27, wherein the system is associated with a transmitting vehicle, and the condition that is satisfied is selected from a group of conditions consisting of: a schedule that indicates a time for a next periodic SDM message transmission to occur; a new vehicle, object, or vulnerable road user identified in a vehicle object list; a change in a safety parameter associated with the transmitting vehicle; and another SDM message is received from another vehicle.

Example 29. The system of any of examples 24-28, wherein the system is associated with a transmitting vehicle, the SDM message is a warning message, and the condition that is satisfied is selected from a group of conditions consisting of: another vehicle is driving within a lane occupied by the transmitting vehicle and is separated from the transmitting vehicle by a distance that is less than a longitudinal minimum safe distance as defined by safety parameters of the transmitting vehicle; and another vehicle is driving within a lane adjacent to the transmitting vehicle and is separated from the transmitting vehicle by a distance that is less than a lateral minimum safe distance as defined by safety parameters of the transmitting vehicle.

Example 30. The system of any of examples 24-29, wherein the system is associated with a transmitting vehicle, the SDM message is an update message, the condition that is satisfied is a lane change by the transmitting vehicle, and the safety parameter is a lane change minimum distance of the transmitting vehicle, a time at which the transmitting vehicle would the lane change, a temporary identity of a front vehicle or a rear vehicle in a target lane of the transmitting vehicle, or an acceleration/deceleration value of the transmitting vehicle.

Example 31. The system of any of examples 24-30, wherein the system is associated with a transmitting vehicle, the SDM message is an update message, the condition that is satisfied is the transmitting vehicle will enter a roundabout, merge lanes, or cross an intersection, and the safety parameter is a time at which the transmitting vehicle will enter the roundabout, merge lanes, or cross the intersection, and an intended action of the transmitting vehicle.

Example 32. The system of any of examples 24-31, wherein the processor is configured to generate the SDM message in accordance with a Vehicle-to-Everything (V2X) or a Vehicle-to-Vehicle (V2V) communication protocol.

Example 33. The system of any of examples 24-32, wherein the processing means generates the SDM message with a value of the safety parameter encoded as a range, scale or factor.

Example 34. The system of any of examples 24-33, wherein the processing means generates the SDM message including the safety parameter when a value of the safety parameter has changed since a previous reporting in excess of a predetermined threshold.

Example 35. The system of any of examples 24-34, wherein: the safety parameter is an agreed-upon vehicle group safety parameter; and the processing means causes the transceiver to transmit the SDM message including encoded data representing the agreed-upon vehicle group safety parameter.

Example 36. The system of any of examples 24-35, wherein the component is associated with a transmitting vehicle, and the processing means generates the SDM message to be transmitted to a cloud-based system via a Road Side Unit (RSU) to be stored in the cloud-based system, wherein the warning or safety parameter transmitted in the SDM message is subsequently obtainable from the cloud-based system by another vehicle.

Example 37. The system of any of examples 24-36, wherein processing means generates a request to a cloud-based system to provide recommended safety parameters based on region or previous safety parameters stored in the cloud-based system; and cause the transceiver to transmit the request to the cloud-based system.

Example 38. The system of any of examples 24-37, wherein the system is associated with a receiving vehicle, and the processing means causes an update of the receiving vehicle, a safety parameter of a transmitting vehicle encoded in an SDM message received by the receiving vehicle from the transmitting vehicle.

Example 39. The system of any of examples 24-38, wherein the processing means determines a longitudinal minimum safe distance or a lateral minimum safe distance, as defined by safety parameters, between the receiving vehicle and the transmitting vehicle based on the updated safety parameter.

Example 40. The system of any of examples 24-39, wherein the processing means generates, in response to a determination that the receiving vehicle and the transmitting vehicle are closer than the longitudinal minimum safe distance or the lateral minimum safe distance, a subsequent SDM message including encoded data representing a warning; and cause the transceiver to transmit the generated subsequent SDM message.

Example 41. The system of any of examples 24-40, wherein the processing means generates a subsequent SDM message including encoded data representing a warning or a safety parameter in response to an SDM message received from another vehicle; and cause a transceiver to transmit the generated subsequent SDM message.

Example 42. The system of e any of examples 24-41, wherein the SDM message is a broadcast SDM message.

While the foregoing has been described in conjunction with exemplary aspect, it is understood that the term "exemplary" is merely meant as an example, rather than the best or optimal. Accordingly, the disclosure is intended to cover alternatives, modifications and equivalents, which may be included within the scope of the disclosure.

Although specific aspects have been illustrated and described herein, it will be appreciated by those of ordinary skill in the art that a variety of alternate and/or equivalent implementations may be substituted for the specific aspects shown and described without departing from the scope of the present application. This application is intended to cover any adaptations or variations of the specific aspects discussed herein.

**Claims**

1. A system of a collaborative Autonomous Vehicle (AV) Safety Driving Model (SDM) system, comprising:

    at least one processor; and
    a non-transitory computer-readable storage medium including instructions that, when executed by the at least one processor, cause the at least one processor to:

        generate, in response to a condition being satisfied, an SDM message including encoded data representing a warning or a safety parameter; and
        cause a transceiver to transmit the generated SDM message.

2. The system of claim 1, wherein the SDM message is a safety parameter update message that includes an indication that a safety parameter is to be updated.

3. The system of claim 2, wherein the system is associated with a transmitting vehicle, and the SDM message includes encoded data indicating that a safety parameter associated with the transmitting vehicle is updated from a previous value.

4. The system of claim 3, wherein the safety parameter updated from the previous value is based on an updated velocity value, an updated maximum acceleration value, or an updated maximum deceleration value.

5. The system of one of the previous claims, wherein the system is associated with a transmitting vehicle, and the condition that is satisfied is selected from a group of conditions consisting of:

> a schedule that indicates a time for a next periodic SDM message transmission to occur;
> a new vehicle, object, or vulnerable road user identified in a vehicle object list;
> a change in a safety parameter associated with the transmitting vehicle; and
> another SDM message is received from another vehicle.

6. The system of one of the previous claims, wherein the system is associated with a transmitting vehicle, the SDM message is a warning message, and the condition that is satisfied is selected from a group of conditions consisting of:

> another vehicle is driving within a lane occupied by the transmitting vehicle and is separated from the transmitting vehicle by a distance that is less than a longitudinal minimum safe distance as defined by safety parameters of the transmitting vehicle; and
> another vehicle is driving within a lane adjacent to the transmitting vehicle and is separated from the transmitting vehicle by a distance that is less than a lateral minimum safe distance as defined by safety parameters of the transmitting vehicle.

7. The system of one of the previous claims, wherein the system is associated with a transmitting vehicle, the SDM message is an update message, the condition that is satisfied is a lane change by the transmitting vehicle, and the safety parameter is a lane change minimum distance of the transmitting vehicle, a time at which the transmitting vehicle would the lane change, a temporary identity of a front vehicle or a rear vehicle in a target lane of the transmitting vehicle, or an acceleration/deceleration value of the transmitting vehicle.

8. The system of one of the previous claims, wherein the system is associated with a transmitting vehicle, the SDM message is an update message, the condition that is satisfied is the transmitting vehicle will enter a roundabout, merge lanes, or cross an intersection, and the safety parameter is a time at which the transmitting vehicle will enter the roundabout, merge lanes, or cross the intersection, and an intended action of the transmitting vehicle.

9. The system of one of the previous claims, wherein the processor is configured to generate the SDM message in accordance with a Vehicle-to-Everything (V2X) or a Vehicle-to-Vehicle (V2V) communication protocol.

10. The system of one of the previous claims, wherein the instructions further cause the processor to generate the SDM message with a value of the safety parameter encoded as a range, scale or factor.

11. The system of one of the previous claims, wherein the instructions cause the at least one processor to:

> generate the SDM message including the safety parameter when a value of the safety parameter has changed since a previous reporting in excess of a predetermined threshold.

12. The system of one of the previous claims, wherein:

> the safety parameter is an agreed-upon vehicle group safety parameter; and
> the instructions cause the at least one processor to cause the transceiver to transmit the SDM message including encoded data representing the agreed-upon vehicle group safety parameter.

13. The system of one of the previous claims, wherein the component is associated with a transmitting vehicle, and the instructions cause the at least one processor to:

> generate the SDM message to be transmitted to a cloud-based system via a Road Side Unit (RSU) to be stored in the cloud-based system,
> wherein the warning or safety parameter transmitted in the SDM message is subsequently obtainable from the cloud-based system by another vehicle.

14. A Road Side Unit (RSU) of a collaborative Autonomous Vehicle (AV) Safety Driving Model (SDM) system, comprising:

> at least one processor; and
> a non-transitory computer-readable storage medium including instructions that, when executed by the at least one processor, cause the at least one processor to:

determine, based on safety parameters received from vehicles neighboring one another, a longitudinal minimum safe distance or a lateral minimum safe distance between the neighboring vehicles;

if the neighboring vehicles are traveling at less than the longitudinal minimum safe distance or the lateral minimum safe distance, generate an SDM message including encoded data representing a warning or a safety parameter; and

cause a transceiver to transmit to the neighboring vehicles.

15. A non-transitory computer readable medium of an Autonomous Vehicle (AV) operating in accordance with a collaborative AV Safety Driving Model (SDM), having stored thereon software instructions that, when executed by a processor, cause the processor to:

generate in response to a condition being satisfied, an SDM message including encoded data representing a warning or a safety parameter; and

transmit, by a transceiver, the generated SDM message.

## FIG. 1

100
Autonomous Vehicle (AV)

## FIG. 2

200
Electronic Components of
Safety System of AV 100

FIG. 3

300
Autonomous Driving
Environment

350

370

310

340

320

360

330

# FIG. 4

400

```
                    ┌──────────────┐
                    │    Start     │
                    └──────┬───────┘
                           │
                           ▼
              ┌────────────────────────────┐
              │ Safety Driving Model (SDM)  │
              │     message received        │
              │           402               │
              └────────────────────────────┘
```

SDM message
(includes 404 and/or 406)

safety parameter
update message
received
404

safety warning
message received
406

SDM Engine in ADAS

Update safety parameters of
transmitting vehicle in receiving
vehicle
408

Update receiving vehicle's
parameters based on driving policy
for safety. Take action.
410

Trigger a warning response or
safety parameter update message
412

transmitted message
(includes 414 and/or 416)

safety parameter
update message
transmitted
414

warning message
transmitted
416

Europäisches
Patentamt

European
Patent Office

Office européen
des brevets

# EUROPEAN SEARCH REPORT

Application Number

EP 21 15 9667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/042013 A1 (KELKAR PARITOSH [US] ET AL) 6 February 2020 (2020-02-06)<br>* paragraph [0067] *<br>* paragraph [0033] *<br>* paragraph [0047] *<br>* paragraph [0072] *<br>* paragraph [0076] *<br>* paragraph [0120] *<br>* paragraph [0141] - paragraph [0143] *<br>* paragraph [0145] *<br>* paragraph [0165] - paragraph [0166] *<br>* paragraph [0191] - paragraph [0192] * | 1-15 | INV.<br>G08G1/0967 |
| A | US 2019/088122 A1 (GUPTA MANISH [IN] ET AL) 21 March 2019 (2019-03-21)<br>* paragraph [0062] *<br>* paragraph [0071] *<br>* paragraph [0017] *<br>* paragraph [0100] * | 1-15 | |
| A | CN 105 930 625 B (UNIV TIANJIN POLYTECHNIC) 14 December 2018 (2018-12-14)<br>* the whole document * | 1-15 | TECHNICAL FIELDS SEARCHED (IPC)<br><br>G08G |
| A | US 2019/225212 A1 (BUERKLE CORNELIUS [DE] ET AL) 25 July 2019 (2019-07-25)<br>* paragraph [0011] - paragraph [0014] *<br>* paragraph [0024] - paragraph [0025] *<br>* paragraph [0093] * | 1-15 | |

The present search report has been drawn up for all claims

| Place of search | Date of completion of the search | Examiner |
|---|---|---|
| The Hague | 13 July 2021 | de la Cruz Valera, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 9667

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2021

| Patent document cited in search report | | | Publication date | Patent family member(s) | | | Publication date |
|---|---|---|---|---|---|---|---|
| US 2020042013 | A1 | | 06-02-2020 | CN<br>DE<br>JP<br>US | 110782684<br>102019209701<br>2020021478<br>2020042013 | A<br>A1<br>A<br>A1 | 11-02-2020<br>06-02-2020<br>06-02-2020<br>06-02-2020 |
| US 2019088122 | A1 | | 21-03-2019 | CA<br>CN<br>EP<br>JP<br>KR<br>US<br>US<br>US<br>US<br>WO | 2996400<br>107921968<br>3347254<br>2018533107<br>20180053653<br>2017076599<br>2017345299<br>2019088122<br>2020160702<br>2017043032 | A1<br>A<br>A1<br>A<br>A<br>A1<br>A1<br>A1<br>A1<br>A1 | 16-03-2017<br>17-04-2018<br>18-07-2018<br>08-11-2018<br>23-05-2018<br>16-03-2017<br>30-11-2017<br>21-03-2019<br>21-05-2020<br>16-03-2017 |
| CN 105930625 | B | | 14-12-2018 | NONE | | | |
| US 2019225212 | A1 | | 25-07-2019 | DE<br>US<br>US | 102020102233<br>2019225212<br>2021009118 | A1<br>A1<br>A1 | 01-10-2020<br>25-07-2019<br>14-01-2021 |

EPO FORM P0459

For more details about this annex : see Official Journal of the European Patent Office, No. 12/82